# EUROPÄISCHE PATENTSCHRIFT

(11) **EP 2 422 997 B1**
(45) Veröffentlichungstag und Bekanntmachung des Hinweises auf die Patenterteilung: **01.10.2014**
(21) Anmeldenummer: 11006793.1
(22) Anmeldetag: 19.08.2011
(51) Int. Cl.: B60B 33/00, B60B 33/02

(54) **Rolle für verfahrbare Gegenstände**
Roller for moveable objects
Rouleau pour objets mobiles

(30) Priorität: 25.08.2010 DE 102010035515
(43) Veröffentlichungstag der Anmeldung: 29.02.2012
(73) Patentinhaber: AS Rollen GmbH, 42499 Hückeswagen (DE)
(72) Erfinder:
(74) Vertreter: Döpp, Ludger

(56) Entgegenhaltungen:
- EP-A1- 0 379 065
- EP-A1- 0 492 151
- DE-A1- 2 937 540
- DE-U1- 29 605 267
- US-A- 5 139 116

## Beschreibung

Die Erfindung betrifft eine Rolle für verfahbare Gegenstände, insbesondere Bettenrolle, entsprechend dem Oberbegriff des Anspruchs 1 und wie es aus Dokument DE 2 957 540 A1 bekannt ist.

Die DE 296 05 267 U1 betrifft ein Betätigungssystem für die Feststelleinrichtung mindestens einer im Bereich von Bauteilen dreh- und/oder schwenkbar gelagerten Rolle an verfahrbaren Einrichtungen, wie z.B. Möbel, medizinische Geräte, Großküchengeräte, Paletten, Müllcontainer oder dergleichen mit mindestens einem, eine Bremskraft erzeugenden, Betätigungselement, mindestens einem der Rolle zugeordneten, im Bereich der Bauteile vorgesehenen Bremselement sowie mindestens einem sich zwischen den das Rollenrad aufnehmenden Bauteilen und dem Betätigungselement erstreckenden Bowdenzug.

Die DE 44 12 603 C2 offenbart eine Feststellvorrichtung für Rollen, insbesondere Lenkrollen, mit einer das reifenbestückte Laufrad tragenden Gabel und einer Bremseinrichtung zumindest für die Drehbewegung des Laufrades, welche Bremseinrichtung einen mittels einer Betätigungsvorrichtung in Richtung des Laufrades verlagerbaren Hubbolzen, ein sich in den Reifen eindrückendes Bremsteil und eine zwischen Betätigungseinrichtung und Bremsteil eingeschaltete Kraftspeicherfeder, welche unter Druckvorspannung steht. Zur Blockierung der Schwenkbeweglichkeit der Gabel dient ein hinter dem Bremsteil installierter Zahnkranz. Der Zahnkranz sitzt hierbei undrehbar an einem vertikal verlagerbaren Stößel. Die bis dato zum Einsatz gelangenden Stößel sind in der Regel mit einem Sechskantprofil ausgebildet, das in einem entsprechend ausgebildeten Gegenprofil eines Führungsrohrs eingreift.

Bedingt durch die bekannten Bauformen lässt es sich nicht vermeiden, dass bei stationärem Gegenstand, beispielsweise einem Krankenbett und Betätigung des /der Bremshebel(s) dennoch eine Relativbewegung der Gabel zum Führungsrohr gegeben ist, die eine unerwünschte Instabilität des Gegenstands, insbesondere eines Krankenbetts, mit sich bringt.

Ziel des Erfindungsgegenstandes ist es, eine Lösung aufzuzeigen, wie derartige Instabilitäten, hervorgerufen durch Toleranzen der miteinander in Wirkverbindung stehenden Elemente, mit einfachen technischen Mitteln beseitigt werden können.

Dieses Ziel wird erreicht durch eine Rolle für verfahrbare Gegenstände, insbesondere Bettenrolle, mit den Merkmalen des Anspruchs 1.

Vorteilhafte Weiterbildungen des Erfindungsgegenstands sind den Unteransprüchen zu entnehmen.

Mit dem Erfindungsgegenstand wird somit, im Gegensatz zum Stand der Technik, erreicht, dass der verfahrbare Gegenstand, beispielsweise ein Krankenbett, ohne Bewegung zwischen Gegenstand und Lenkgabel an Ort und Stelle verbleibt, ohne dass ein größeres Relativspiel zwischen dem Führungsröhr und der Gabel gegeben ist.

Rollen für verfahrbare Gegenstände werden aus unterschiedlichen Materialien hergestellt. Je nach Einsatzfall können Rollen zumindest teilweise aus Kunststoffmaterialien oder metallischen Werkstoffen hergestellt werden. Dies betrifft insbesondere die das Laufrad aufnehmende Gabel, respektive auch weitere innerhalb der Gabel/des Führungsrohrs positionierte Bauelemente.

Beide Varianten bieten unterschiedliche Lösungsmöglichkeiten für das aufgezeigte Problem.

Während es bei der vorwiegend aus Metall bestehenden Version sinnvoll sein kann, die miteinander in Wirkverbindung zu bringenden, mit insbesondere Zahnprofilen versehenen, scheiben- oder ringförmig ausgebildeten Bauteile ebenfalls aus Metall herzustellen, kann es bei einer Kunststofflösung sinnvoll sein, soweit technisch möglich, derartige Zahnprofile bereits an den entsprechenden Bauelementen der Gabel und/oder des Feststellelements bei deren/dessen Herstellung mit anzuformen.

Dies gilt in gleicher Weise auch für das mit einem Zahnprofil versehene, die beiden in verriegelnder/entriegelnder Weise miteinander in Wirkverbindung bringbare weitere Bauteil.

Einem weiteren Gedanken der Erfindung gemäß ist das Feststellelement als zylindrischer Bolzen ausgebildet, an dessen gabelseitigem Ende das freie Ende des Bremshebels angreift, wobei rohrseitig am Feststellelement eine Druckscheibe vorgesehen, insbesondere einstückig daran angeformt ist, die entweder selbst mit einem Zahnprofil versehen ist oder aber ein mit einem Zahnprofil versehenes Bauteil trägt.

Das Feststellelement ist in seinem der Druckscheibe abgewandten Endbereich durch ein Betätigungselement in axialer Richtung bewegbar und bringt somit das damit in Wirkverbiridung stehende mit dem Zahnradprofil versehene Bauteil in veroder entriegelnder Weise mit den beiden anderen Profilen in Eingriff, respektive hebt die Verriegelung der beiden Profile auf.

Je nach Ausgestaltungsform des Erfindungsgegenstandes kann es sinnvoll sein, rohr- und/oder gabelseitig mit dem Feststellelement in Wirkverbindung stehende Federelemente vorzusehen.

In ähnlicher Weise wie in der DE 296 05 267 U1 vorgeschlagen, können mehrere an einem verfahrbaren Gegenstand, beispielsweise einem Krankenbett, angelenkte Rollen gleichzeitig in bremsender/verriegelnder Weise betätigt werden.

Der Erfindungsgegenstand ist anhand eines Ausführungsbeispiels in der Zeichnung dargestellt und wird wie folgt beschrieben. Es zeigen:
- Figuren 1 und 2: unterschiedliche Darstellungen bzw. Schnitte, respektive Teildarstellungen, einer erfindungsgemäßen Rolle, bei der die wesentlichen Bauteile aus Metall bestehen;
- Figuren 3 bis 6: Darstellung einer Rolle in verschiedenen Schnitten und Ansichten, wobei zumindest die Gabel aus Kunststoff hergestellt ist.

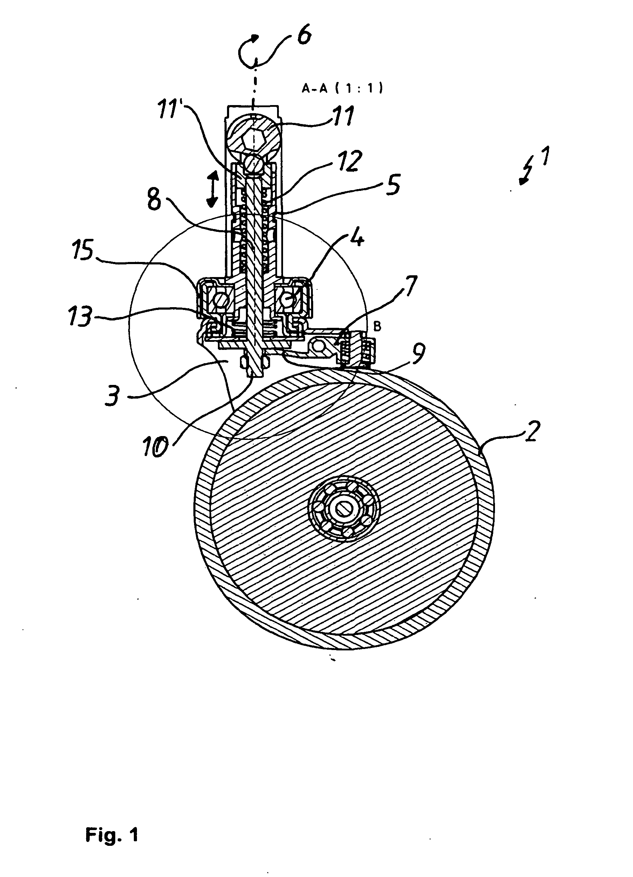

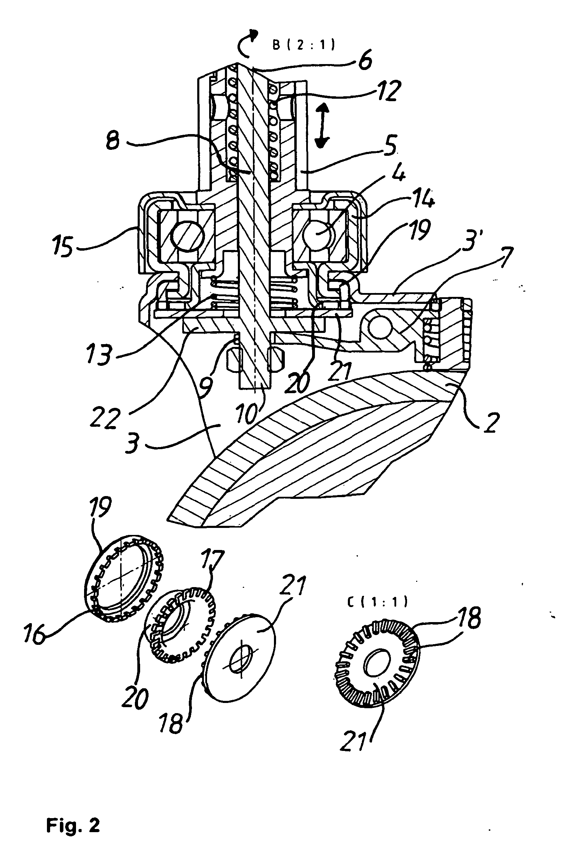

Die Figuren 1 und 2 zeigen eine erfindungsgemäße Rolle 1 einerseits in der Seitenansicht vollständig im Schnitt und andererseits in einer Teilansicht, wobei die erfindungswesentlichen Bauteile als Einzelteile erkennbar sind.

Die Rolle 1 beinhaltet im Wesentlichen folgende Bauelemente: ein Laufrad 2, eine selbiges aufnehmende Gabel 3, die über ein Rollenlager 4 relativ zu einem Führungsrohr 5 um eine Vertikalachse 6 schwenkbar ausgebildet ist. Mit dem Laufrad 2 ist ein zumindest aus einem Bremshebel 7 und einem innerhalb des Führungsrohrs 5 positionierten Feststellelement 8 gebildetes Bremssystem in Wirkverbindung bringbar. Der Bremshebel 7 ist hierbei außerhalb des Laufrads 2 im Bereich seines freien Endes 9 am gabelseitigen Endbereich 10 des Feststellelements 8 festlegbar. Über einen in diesem Beispiel als Sechskantexzenter ausgebildeten Exzenter 11 sowie ein damit in Wirkverbindung stehendes Exzenterdruckstück 11' kann das Feststellelement 8 nun in vertikaler Richtung relativ zum stationären Führungsrohr 5 bewegt werden, so dass der Bremshebel 7 entweder auf das Laufrad 2 aufgedrückt oder aber von selbigem entfernt werden kann. Das Exzenterdruckstück 11' ist hierbei fest, beispielsweise durch Verschraubung, mit dem einen Ende des Feststellelements 8 verbunden und dient als Stützfläche für das Federelement 12. Im Bereich des Führungsrohrs 5, respektive der Gabel 3, ist neben dem Federelement 12 noch ein Federelement 13 vorgesehen, wobei das Federelement 12 mit dem Exzenterdruckstück 11', respektive dem Feststellelement 8, in Wirkverbindung steht und die Bremskraft über den Bremshebel auf das Rad 2 überträgt.

Das Rollenlager 4 wird von einer Befestigungsschale 14 umgeben, während das Gesamtrollenlager 4 von einer Lageraufnahme 15 gegen Umwelteinflüsse geschützt ist. Gabelseitig sind mit Zahnprofilen 16,17,18 versehene Bauteile 19,20,21 vorgesehen, die in diesem Beispiel aus Metallringen/-scheiben gebildet sind. Das Bauteil 19, auch als Gabeirastscheibe bezeichnet, soll in diesem Beispiel mit der Gabel 3, respektive dem Radhalter 3', vernietet sein (nicht dargestellt). Das Bauteil 20 ist etwa hutförmig ausgebildet und stützt einen Teilbereich des Rollenlagers 4 ab. Das Bauteil 21 (Rastscheibe) liegt in Umfangsrichtung frei beweglich auf einer einstückig am Feststellelement 8 angeformten Druckscheibe 22 auf. Sofern eine solche Ausführungsform nicht gewünscht ist, kann die Druckscheibe 22 so ausgebildet werden, dass sie einen verzahnten Bereich aufweist. Die Gesamtfunktion der Rolle 1 wird dadurch nicht beeinträchtigt. Das Federelement 12 zieht des weiteren die Rastscheibe 21 aus ihrer verriegelten Stellung.

Während des Verfahrens eines Gegenstands, beispielsweise eines nicht weiter dargestellten Krankenbetts, muss einerseits die freie Drehbarkeit des Laufrades 2 gewährleistet sein und andererseits auch Lenkbewegungen der Rolle 1 um die Vertikalachse 6 möglich sein. Nach entsprechender Ausrichtung des Gegenstands, beispielsweise eines Krankenbetts, und Betätigung des Feststellelements 8 über das Exzenterdruckstück 11', respektive den Exzenter 11, wird nun einerseits das Laufrad 2 über den Bremshebel 7 fixiert und andererseits das Zahnprofil 18 des Bauteils 21 in die miteinander in Wirkverbindung stehenden Zahnprofile 16,17 der Bauteile 19,20 eingebracht. Durch diese Maßnahme ist eine Schwenkbewegung der Gabel 3 relativ zum Führungsrohr 5 nicht mehr möglich, d.h. die Bauteile 19,20,21 sind gegeneinander verriegelt.

Dadurch, dass die Verzahnungen 16,17,18 relativ weit am äußeren Umfang der Bauteile 19,20,21 vorgesehen sind, ist kaum noch ein Spiel in Umfangsrichtung gegeben, so dass der Gegenstand, beispielsweise ein Krankenbett, wackelfrei an seinem Ort steht. Das Federelement 13 dient dazu, dass bei Deaktivierung der Verriegelung der Bauteile 19,20,21 das Bauteil 21 aus den Zahnprofilen 16,17 der Bauteile 19,20 herausgedrückt wird.

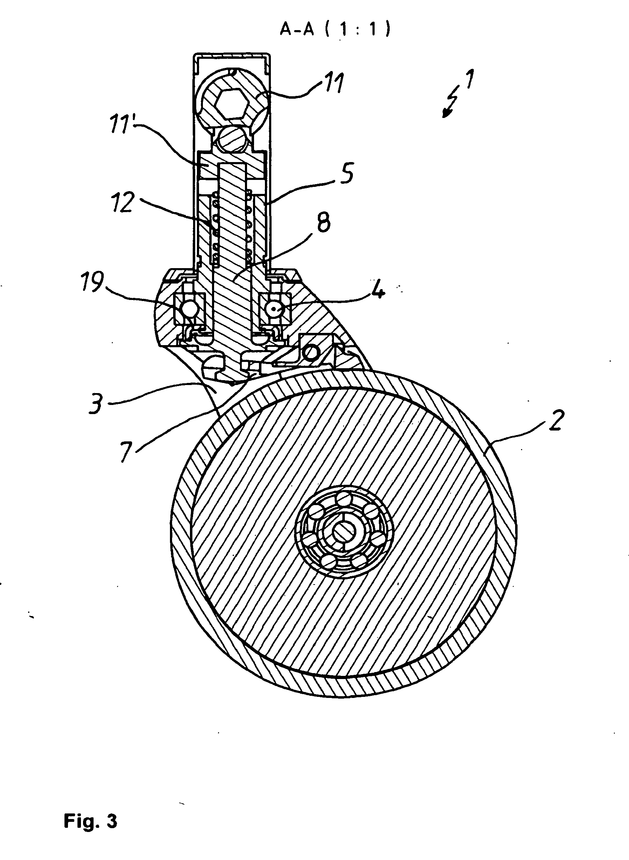

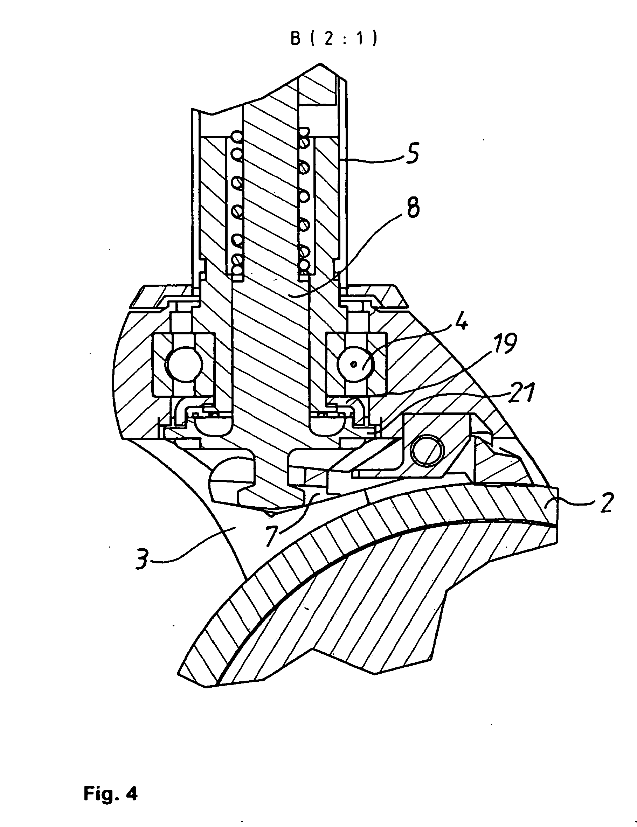

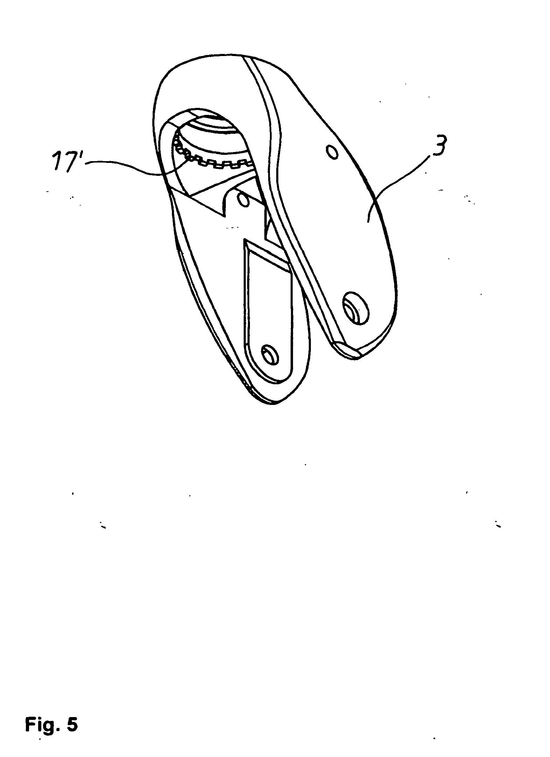

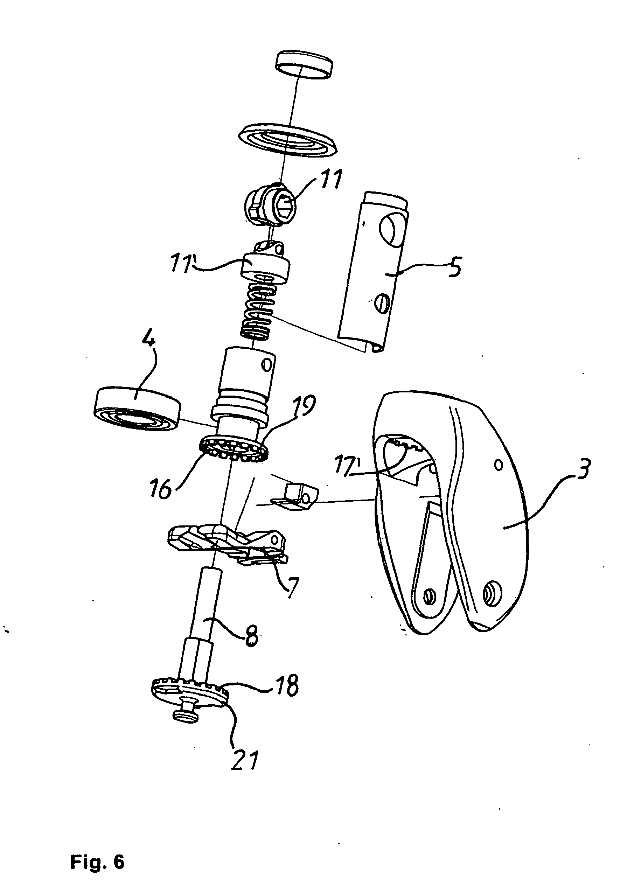

Die Figuren 3 bis 6 zeigen eine Rolle 1' in verschiedenen Schnitten und Ansichten.

Gleiche Bauteile sind mit gleichen Bezugszeichen versehen.

Bei der Rolle 1' kommt eine aus Kunststoff bestehende Gabel 3 zum Einsatz. Bei derartigen Bauteilen macht es Sinn, das in Figur 1 und 2 dargestellte Bauteil 20 durch eine beim Herstellungsvorgang der Gabel 3 angeformte Verzahnung 17' zu ersetzen. In Analogie zu den Figuren 1 und 2 sind auch in den Figuren 3, 4und 6 folgende Bauteile erkennbar: der Exzenter 11, das Exzenterstück 11', das Feststellelement 8, das Führungsrohr 5, das Rollenlager 4, der Bremshebel 7, das Laufrad 2 sowie die Verriegelungsmittel 19 und 21 samt Verzahnungen 16,18 sowie das Federelement 12. Das Feststellelement 8 samt Verriegelungsmittel 21 sind in diesem Beispiel ebenfalls aus Kunststoff und einstückig hergestellt.

### Bezugszeichenliste

- 1: Rolle
- 1': Rolle
- 2: Laufrad
- 3: Gabel
- 3': Radhalter
- 4: Rollenlager
- 5: Führungsrohr
- 6: Vertikalachse
- 7: Bremshebel
- 8: Feststellelement
- 9: freies Ende
- 10: Endbereich
- 11: Exzenter
- 11': Exzenterdruckstück
- 12: Federelement
- 13: Federelement
- 14: Befestigungsschale
- 15: Lageraufnahme
- 16: Verzahnung
- 17: Verzahnung
- 17': Verzahnung
- 18: Verzahnung
- 19: Bauteil
- 20: Bauteil
- 21: Bauteil (Rastscheibe)
- 22: Druckscheibe

## Patentansprüche

1. Rolle für verfahrbare Gegenstände, insbesondere Bettenrolle, zumindest beinhaltend ein Laufrad (2), eine selbiges aufnehmende Gabel (3), ein Führungsrohr (5), das über mindestens ein Lager (4) relativ zur Gabel (3) schwenkbar ausgebildet ist, ein mit dem Laufrad (2) in Wirkverbindung bringbares, zumindest aus einem Bremshebel (7) und einem innerhalb des Führungsrohrs (5) positionierten Feststellelement (8) gebildetes Bremssystem, wobei gabelseitig Verriegelungsmittel (19,20,21) vorgesehen sind, wobei zur Festlegung der Gabel (3) relativ zum Führungsrohr (5) die mit Profilen (16,17,17',18) versehenen Verriegelungsmittel (19-21) durch Betätigung des Feststelielements (8) miteinander in Wirkverbindung bringbar sind, so dass eine im Wesentlichen spielfreie Arretierung zwischen der Gabel (3) und dem Führungsrohr (5) gegeben ist, **dadurch gekennzeichnet, dass** zwei der die Verriegelungsmittel bildenden Bauteile (19,20) stationär jedoch relativ zueinander drehbar vorgesehen sind, während ein drittes Bauteil (21) das erste (19) gegenüber dem zweiten Bauteil (20) nach entsprechendem Profileingriff festsetzt.

2. Rolle nach Anspruch 1, **dadurch gekennzeichnet, dass** die Verriegelungsmittel (19-21) durch Zahnprofile (16-18) gebildet sind.

3. Rolle nach Anspruch 1 oder 2, **dadurch gekennzeichnet, dass** in Abhängigkeit vom Material der Gabel (3) die Zahnprofile 17') gabelseitig angeformt sind.

4. Rolle nach einem der Ansprüche 1 bis 3, **dadurch gekennzeichnet, dass** die die Zahnprofile (19-21) beinhaltenden Bauteile (16-18) scheiben- oder ringförmig ausgebildet sind.

5. Rolle nach einem der Ansprüche 1 bis 4, **dadurch gekennzeichnet, dass** die miteinander in Wirkverbindung bringbaren Zahnprofile (16,17,17`,18) in den äußeren Umfangsbereichen der Bauteile (19-21) vorgesehen sind.

6. Rolle nach einem der Ansprüche 1 bis 5, **dadurch gekennzeichnet, dass** die Gabel (3) aus Kunststoff besteht und ein angeformtes Zahnprofil (17') beinhaltet, das mit einem fest stehenden gezahnten Bauteil (19) in Wirkverbindung steht, wobei ein weiteres, mit einem Zahnprofil (18) versehenes Bauteil (21) bei Betätigung des Feststellelements (8) das Zahnprofil (17') der Gabel (3) gegenüber dem Zahnprofil (16) des Bauteils (19) in verriegelnder Weise festlegt.

7. Rolle nach einem der Ansprüche 1 bis 6, **dadurch gekennzeichnet, dass** das Feststellelement (8) als zylindrischer Bolzen ausgebildet ist, an dessen gabelseitigem Ende das freie Ende (9) des Bremshebels (7) angreift, und dass rohrseitig am Feststellelement (8) eine Druckscheibe (22) vorgesehen, insbesondere einstückig daran angeformt ist, die entweder selbst mit einem Zahnprofil versehen ist oder ein mit einem Zahnprofil (18) versehenes Bauteil (21) trägt.

8. Rolle nach einem der Ansprüche 1 bis 7, **dadurch gekennzeichnet, dass** das Feststellelement (8) in seinem der Druckscheibe (22) abgewandten Endbereich durch einen Exzenter (11) in axialer Richtung bewegbar ist und somit das damit in Wirkverbindung stehende mit dem Zahnprofil (18) versehene Bauteil (21) in ver- oder entriegelnder Weise mit den beiden anderen Profilen (16,17,17') in Eingriff bringt oder die Verriegelung der beiden Profile (16,17,17`) auflöst.

9. Rolle nach einem der Ansprüche 1 bis 8, **dadurch gekennzeichnet, dass** der Exzenter (11) über ein Exzenterdruckstück (11') mit dem Feststellelement (8) in Wirkverbindung steht.

10. Rolle nach einem der Ansprüche 1 bis 9, **dadurch gekennzeichnet, dass** rohr- und/oder gabelseitig zumindest mit dem Feststellelement (8) in Wirkverbindung stehende Federelemente (12,13) vorgesehen sind.

## Claims

1. A roller for moveable objects, in particular a bed roller, at least comprising a running wheel (2), a fork (3) that receives the same one, a guide tube (5) which is pivoting with respect to the fork (3) by means of at least one bearing (4), a braking system which is constituted by at least one brake lever (7) and an arresting element (8) positioned inside the guide tube (5) and which can be actively connected to the running wheel (2), wherein locking means (19, 20, 21) are provided on the side of the fork, wherein the locking means (19-21) provided with profiles (16, 17, 17', 18) can be actively connected to each other by actuating the arresting element (8) for fixing the fork (3) with respect to the guide tube (5), such that a locking that is essentially without clearance between the fork (3) and the guide tube (5) is obtained, **characterized in that** two of the structural parts (19, 20) that form the locking means are provided in a stationary manner but remain still rotatable with respect to each other, whereas a third structural part (21) arrests the first part (19) with respect to the second part (20) after a corresponding engagement of the profiles.

2. A roller according to claim 1, **characterized in that** the locking means (19-21) are formed by tooth profiles (16-18).

3. A roller according to claim 1 or 2, **characterized in that** in dependence on the material of the fork (3), the tooth profiles (17') are moulded on said fork (3).

4. A roller according to one of the claims 1 through 3, **characterized in that** the structural parts (16-18) comprising the tooth profiles (19-21) are disk- or ringshaped.

5. A roller according to one of the claims 1 through 4, **characterized in that** the tooth profiles (16, 17, 17', 18) that can be brought into active connection with each other are provided in the outer circumferential areas of the structural parts (19-21).

6. A roller according to one of the claims 1 through 5, **characterized in that** the fork (3) is made of plastic and comprises a moulded-on tooth profile (17') that is actively connected to a stationary toothed structural part (19), wherein another structural part (21) provided with a tooth profile (18) fixes the tooth profile (17') of the fork (3) with respect to the tooth profile (16) of the structural part (19) in a locking manner upon actuation of the arresting element (8).

7. A roller according to one of the claims 1 through 6, **characterized in that** the arresting element (8) is designed as cylindrical bolt, in the end of which on the side of the fork the free end (9) of the brake lever (7) engages, and that a pressure disk (22) is provided on the arresting element (8) on the side of the tube and is in particular integrally moulded thereon, which pressure disk (22) is either provided itself with a tooth profile or carries a structural part (21) provided with a tooth profile (18).

8. A roller according to one of the claims 1 through 7, **characterized in that** the end area of the arresting element (8) that is opposite to the pressure disk (22) can be moved in the axial direction by means of an eccentric and the arresting element (8) thus brings the structural part (21) provided with the tooth profile (18) and actively connected to said arresting element into engagement with the two other profiles (16, 17, 17') in a locking or unlocking manner or releases the lock of the two profiles (16, 17, 17').

9. A roller according to one of the claims 1 through 8, **characterized in that** the eccentric (11) is actively connected to the arresting element (8) by means of an eccentric thrust piece (11').

10. A roller according to one of the claims 1 through 9, **characterized in that** spring elements (12, 13) that are actively connected to at least the arresting element (8) are provided on the side of the tube and/or on the side of the fork.

## Revendications

1. Rouleau pour des objets mobiles, notamment rouleau de lit, au moins comprenant une roue de roulement (2), une fourchette (3) recevant la même, un tube de guidage (5) qui est pivotant par rapport à la fourchette (3) par moyen d'au moins un palier (4), un système de freinage qui est formé par au moins un levier de frein (7) et un élément d'arrêt (8) positionné à l'intérieur du tube de guidage (5) et qui est susceptible d'être activement relié à la roue de roulement (2), dans lequel des moyens de verrouillage (19, 20, 21) sont prévus du côté de la fourchette, les moyens de verrouillage (19-21) munis des profilés (16, 17, 17', 18) pouvant être amenés en liaison active les uns avec les autres par actionnement de l'élément d'arrêt (8) pour fixer la fourchette (3) par rapport au tube de guidage (5), de sorte qu'on obtient un arrêt essentiellement sans jeu entre la fourchette (3) et le tube de guidage (5), **caractérisé en ce que** deux des pièces (19, 20) qui constituent les moyens de verrouillage sont prévues de façon stationnaire, mais elles restent encore rotatives l'une par rapport à l'autre, tandis qu'une troisième pièce (21) arrête la première pièce (19) par rapport à la deuxième pièce (20) après un engrènement correspondant des profilés.

2. Rouleau selon la revendication 1, **caractérisé en ce que** les moyens de verrouillage (19-21) sont formés par des profilés dentés (16-18).

3. Rouleau selon la revendication 1 ou la revendication 2, **caractérisé en ce qu'**en fonction du matériau de la fourchette (3), les profilés dentés (17') sont moulés sur la fourchette (3).

4. Rouleau selon l'une des revendications 1 à 3, **caractérisé en ce que** les pièces (16-18) comprenant les profilés dentés (19-21) sont en forme de disque ou d'anneau.

5. Rouleau selon l'une des revendications 1 à 4, **caractérisé en ce que** les profilés dentés (16, 17, 17', 18) qu'on peut amener en liaison active les uns avec les autres sont prévus dans les zones circonférentielles extérieures des pièces (19-21).

6. Rouleau selon l'une des revendications 1 à 5, **caractérisé en ce que** la fourchette (3) est fabriquée en plastique et comprend un profilé denté (17')
moulé sur celle-ci, lequel profilé est en liaison active avec une pièce dentée stationnaire (19), une autre pièce (21) munie d'un profilé denté (18) fixant le profilé denté (17') de la fourchette (3) par rapport au profilé denté (16) de la pièce (19) de manière verrouillant, si l'élément d'arrêt (8) est actionné.

7. Rouleau selon l'une des revendications 1 à 6, **caractérisé en ce que** l'élément d'arrêt (8) est configuré comme boulon cylindrique dont l'extrémité du côté de la fourchette est engrenée par l'extrémité libre (9) du levier de frein (7), et qu'un disque de pression (22) est prévu sur l'élément d'arrêt (8) du côté du tube et est notamment moulé d'une seule pièce avec celui-ci, lequel disque de pression (22) est muni lui-même d'un profilé denté ou porte une pièce (21) munie d'un profilé denté (18).

8. Rouleau selon l'une des revendications 1 à 7, **caractérisé en ce que** la zone d'extrémité de l'élément d'arrêt (8) laquelle est opposée au disque de pression (22) est déplaçable dans la direction axiale par un excentrique (11) et l'élément d'arrêt (8) met ainsi la pièce (21) qui est activement reliée à celui-ci et est munie du profilé denté (18) en prise avec les deux autres profilés (16, 17, 17') de façon verrouillant ou déverrouillant ou desserre le verrouillage des deux profilés (16, 17, 17').

9. Rouleau selon l'une des revendications 1 à 8, **caractérisé en ce que** l'excentrique (11) est en liaison active avec l'élément d'arrêt (8) par un élément de pression d'excentrique (11').

10. Rouleau selon l'une des revendications 1 à 9, **caractérisé en ce que** des éléments de ressort (12, 13) qui sont au moins activement reliés à l'élément d'arrêt (8) sont prévus du côté du tube et/ou du côté de la fourchette.
